# EUROPEAN PATENT SPECIFICATION

(11) **EP 0 422 305 B1**
(45) Date of publication and mention of the grant of the patent: **02.03.1994**
(21) Application number: 89311249.0
(22) Date of filing: 31.10.1989
(51) Int. Cl.: F16K 31/22, A47J 31/56

(54) **Float chamber**
Schwimmkasten
Chambre à flotteur

(30) Priority: 11.10.1989 AU 6802/89
(43) Date of publication of application: 17.04.1991
(73) Proprietor: ZIP HEATERS (AUST.) PTY LIMITED, Marrickville New South Wales 2204 (AU)
(72) Inventor: Martin, Christopher Roy, Revesby New South Wales 2212 (AU); Massey, Raymond Dennis, Cambridge Park New South Wals 2750 (AU)
(74) Representative: Opperman, Stuart Richard

(56) References cited:
- DE-B- 1 243 482
- FR-A- 1 158 100
- GB-A- 1 535 887
- US-A- 3 874 826

## Description

This invention relates to boiling water units having a float chamber and is more particularly concerned with the float chambers of boiling water units such as depicted and described in the specification of Australian Patent 531449, the disclosure of which is incorporated herein by reference.

In such a conventional boiling water unit, a float chamber is located beside the upper portion of the boiling water tank, the arrangement being such that the water level in the float chamber is identical with that in the boiling water tank. When boiling water is drawn off from the tank, the water level in both the float chamber and the boiling water tank is lowered and a float, arranged to float on the water in the float chamber, falls with the falling water level in the float chamber. A float arm connected to the float opens a valve when the float has fallen to a predetermined level, the valve when opened allows cold water under mains pressure to enter the float chamber.

One problem associated with cistern fed type boiling water units resides in the capacity to activate the thermostat sensor to switch on the heating element in the boiling water tank as soon as possible after water has been drawn from the boiling water tank.

In conventional such boiling water units, a jumper valve has been provided alternatively to shut off and allow flow of water from the mains supply to the float chamber. Above the maximum water level in the float chamber, conventional boiling water units incorporate a gauze sleeve housing a sensor. This sensor is provided for the detection of water temperature in the float chamber and is adapted to activate the heating element in the main tank when a drop in water temperature in the float chamber is detected.

Conventional boiling water units have been provided with a tongue on the float arm for the diversion of some of the water entering the float chamber from the mains to the aforesaid gauze sleeve, whereupon the sensor, once sensing the temperature of the water entering the float chamber from the mains, will activate the aforesaid heating element. This arrangement has proven satisfactory, but nevertheless is an arrangement which, for optimum operation of the unit, might be improved upon.

The invention is concerned with the provision of an improved boiling water unit.

According to the present invention a boiling water unit comprising a main tank in which, in use, water is heated and from which, in use, heated water is drawn off and a float chamber into which, in use, water under supply pressure is admitted for transfer to the main tank, the float chamber comprising a nozzle to permit inflow of water to the float chamber, a float arm carrying a float at one end and being adapted to pivot about its opposite end and a temperature sensor for controlling the heating of water in the main tank, is characterised in that a valve seat is affixed to the float arm to close the nozzle to prevent inflow of water to the float chamber in response to elevation of the water level in the float chamber and the valve seat has a hollowed portion which is at least partially surrounded by a ramp surface and a sealing member shaped for accommodation in the hollowed portion, the arrangement being such that in use of the unit, water entering the float chamber through the nozzle, first contacts the sealing member and is deflected, in part, from the sealing member to contact and activate the sensor.

By way of example only, one embodiment of apparatus in accordance with this invention will now be described with reference to the accompanying drawings wherein:-
Figure 1 is a section of a float chamber of a boiling water unit;
Figure 2 depicts the jumper valve indicated at B in Fig. 1 in its open position; and
Figure 3 depicts the jumper value of Fig. 1 in its closed position.

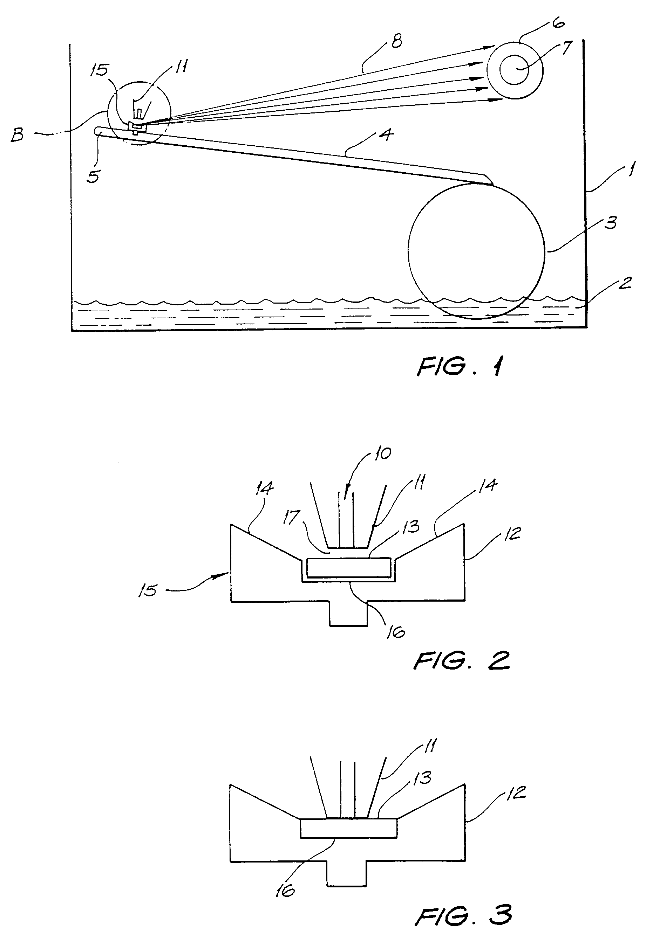

In the drawings, a float chamber 1 contains water 2 at a level which indicates that boiling water has been extracted from the main tank (not shown). A float 3 and float arm 4 operate by virtue of a pivot 5. A jumper valve as shown generally at 15 is open as depicted in Fig. 2 so that water 10 is permitted to enter float chamber 1 through nozzle 11. The jumper valve 15 is provided with a ramp surface 14 and a side wall 12. Water 10 entering float chamber 1 under pressure first strikes a sealing member 13 accommodated within a central hollowed portion of the valve (15), and is then dissipated into the float chamber 1, some of water 10 being included in a spray 8 which strikes a gauze sleeve 6 which houses a sensor 7. Some of the water incorporated in the spray 8 will strike the sensor 7 which will operate the heating element for the main tank.

As water continues to enter the float chamber 1, the float 3 will rise as the surface level of water 2 rises. In due course, the jumper valve 15 will assume the position indicated in Fig. 3 relative to the nozzle 11, closing off the inflow of water to the float chamber 1. Clearly, under the pressure of water 10, the sealing member 13 will expand and for this reason an expansion gap is left between the sealing member 13 and the valve seat 16 as depicted in Fig. 2. Under expansion of the sealing member 13, this expansion gap will be fully occupied by the expanding sealing member 13 which will rest against valve seat 16. When the water level in the float chamber 1 is again lowered, and water again enters the float chamber 1 through the nozzle 11, the jumper valve 15 will again assume its location relative to the nozzle 11 as indicated in Fig. 2 and the sealing member 13 will contract as shown in Fig. 2. The preferred thickness of the sealing member 13 is in the order of 2 millimetres and the preferred opening gap 17 is approximately 1 millimetre. The provision of the expansion gap between the sealing member 13 and the seat 12 serves to prevent any tendency of the sealing member 13 to buckle under closing pressure.

## Claims

1. A boiling water unit comprising a main tank in which, in use, water is heated and from which, in use, heated water is drawn off and a float chamber (1) into which, in use, water under supply pressure is admitted for transfer to the main tank, the float chamber (1) comprising a nozzle (11) to permit inflow of water to the float chamber (1), a float arm (4) carrying a float (3) at one end and being adapted to pivot about its opposite end and a temperature sensor (7) for controlling the heating of water in the main tank, characterised in that a valve seat (15) is affixed to the float arm (4) to close the nozzle (11) to prevent inflow of water to the float chamber (1) in response to elevation of the water level in the float chamber (1) and the valve seat (15) has a hollowed portion which is at least partially surrounded by a ramp surface (14) and a sealing member (13) shaped for accommodation in the hollowed portion, the arrangement being such that in use of the unit, water entering the float chamber (1) through the nozzle (11), first contacts the sealing member (13) and is deflected, in part, from the sealing member (13) to contact and activate the sensor (7).

2. A boiling water unit according to claim 1 characterised in that the sealing member (13) has a substantially flat surface adapted for sealing contact with the nozzle (11).

3. A boiling water unit according to claim 1 or 2, characterised in that the sealing member (13) comprises rubber or a rubber substitute material.

4. A boiling water unit according to claim 1, 2 or 3, characterised in that the sealing member (13) is of such dimensions as to loosely fit within the hollowed valve seat portion (16) at normal operating temperatures of the unit, but is adapted to expand under pressure occasioned by contact of the nozzle (11), forcing the sealing member (13) against the valve seat (16), at least substantially to close the hollowed valve seat portion (16) when the float (3) rises in the float chamber causing the pivot arm (4) to elevate the valve seat (16) and the sealing member (13) to close the nozzle (11).

5. A boiling water unit according to any one of claims 1-4, characterised in that the sealing member (13) is cylindrical and is of a thickness greater than the width of the gap between the nozzle (11) and the sealing member (13) when the float rests on the chamber bottom.

6. A boiling water unit according to any one of claims 1-5, characterised in that the ramp surface (14) is frusto-conical and completely surrounds the hollowed valve seat portion (12).

## Patentansprüche

1. Heißwassereinheit mit
einem Hauptbehälter, in dem bei Betrieb das Wasser erhitzt und aus dem das erwärmte Wasser bei Gebrauch abgezogen wird, und
einer Schwimmerkammer (1), in die das Wasser bei Betrieb unter Zugabedruck zugelassen wird und damit zum Hauptbehälter gelangt,
wobei die Schwimmerkammer (1) aufweist:
eine Düse (11), die ein Zufließen von Wasser in die Schwimmerkammer (1) ermöglicht,
einen Schwimmerarm (4), der einen Schwimmer (3) an einem Ende trägt und um sein gegenüberliegendes Ende geschwenkt werden kann, sowie
einen Temperaturfühler (7), der das Erwärmen des Wassers im Hauptbehälter kontrolliert,
dadurch gekennzeichnet,
daß am Schwimmerarm (4) ein Ventilsitz (5) befestigt ist, der die Düse (11) verschließt und ein Zufließen von Wasser in die Schwimmerkammer (1) verhindert und zwar auf ein Steigen des Wasserspiegels in die Schwimmerkammer (1) hin und
daß der Ventilsitz (15) ein hohles Teil besitzt, das wenigstens teilweise umgeben ist von einer Rampenfläche (14) und einem Dichtungsteil (13), das formmäßig in das hohle Teil paßt,
wobei die Anordnung so ist, daß bei Betrieb der Einheit das Wasser durch die Düse (11) in die Schwimmerkammer (1) gelangt, zunächst das Dichtungsteil (13) benetzt und dann vom Dichtungsteil (13) teilweise abgelenkt wird, so daß ein Fühler (7) benetzt und betätigt wird.

2. Heißwassereinheit nach Anspruch 1, dadurch gekennzeichnet, daß das Dichtungsteil (13) eine im wesentlichen flache Fläche besitzt, die sich für einen dichtigen Kontakt mit der Düse (11) eignet.

3. Heißwassereinheit nach Anspruch 1 oder 2, dadurch gekennzeichnet, daß das Dichtungsteil (13) Gummi oder ein Gummiersatzmaterial aufweist.

4. Heißwassereinheit nach Anspruch 1, 2 oder 3, dadurch gekennzeichnet, daß das Dichtungsteil (13) so bemessen ist, daß es bei normalen Betriebstemperaturen der Einheit in das hohle Ventilsitzteil (16) paßt, aber sich bei Druck, der bei Kontakt mit der Düse (11) auftritt, ausdehnt und das Dichtungsteil (13) gegen den Ventilsitz (16) zwingt, so daß zumindest das hohle Ventilsitzteil (16) im wesentlichen verschlossen wird, wenn der Schwimmer (13) in der Schwimmerkammer ansteigt und den Schwenkarm (4) veranlaßt, den Ventilsitz (16) und das Dichtungsteil (13) anzuheben, damit die Düse (11) verschlossen wird.

5. Heißwassereinheit nach irgendeinem der Ansprüche 1 bis 4, dadurch gekennzeichnet, daß das Dichtungsteil (13) zylindrisch ist und dessen Dicke größer als die Breite des Spalts zwischen der Düse (11) und dem Dichtungsteil (13), wenn der Schwimmer am Kammerboden liegt.

6. Heißwassereinheit nach irgendeinem der Ansprüche 1 bis 5, dadurch gekennzeichnet, daß die Rampenfläche (14) einem stumpfen Kegel gleicht und vollständig das hohle Ventilsitzteil (12) umgibt.

## Revendications

1. Unité de chauffage de l'eau comprenant un réservoir principal dans lequel, en cours d'utilisation, de l'eau est chauffée et duquel, en cours d'utilisation, de l'eau chaude est extraite, et une cuve à niveau constant (1) dans laquelle, en cours d'utilisation, est admise de l'eau sous pression d'alimentation pour être transférée au réservoir principal, la cuve à niveau constant (1) comprenant une tubulure (11) pour permettre l'entrée d'eau dans la cuve à niveau constant (1), un bras de flotteur (4) portant un flotteur (3) en une première extrémité et apte à pivoter autour de son extrémité opposée, et un capteur de température (7) pour réguler le chauffage de l'eau dans le réservoir principal, caractérisé en ce qu'un siège de vanne (15) est fixé au bras de flotteur (4) pour fermer la tubulure (11) afin d'empêcher l'entrée d'eau dans la cuve à niveau constant (1) en réponse à une élévation du niveau d'eau dans la cuve à niveau constant (1), et le siège de vanne (15) comporte une partie creuse qu'entoure au moins partiellement une surface inclinée (14), et un élément d'étanchéité (13) configuré pour se loger dans la partie creuse, la disposition étant telle que lors de l'utilisation de l'unité, de l'eau qui pénètre dans la cuve à niveau constant (1) par la tubulure (11) touche d'abord l'élément d'étanchéité (13) et est en partie déviée de l'élément d'étanchéité (13) pour venir toucher le capteur (7) et l'activer.

2. Unité de chauffage de l'eau selon la revendication 1, caractérisée en ce que l'élément d'étanchéité (13) a une surface sensiblement plate adaptée à un contact étanche avec la tubulure (11).

3. Unité de chauffage de l'eau selon la revendication 1 ou 2, caractérisée en ce que l'élément d'étanchéité (13) est du caoutchouc ou un matériau substitut du caoutchouc.

4. Unité de chauffage de l'eau selon la revendication 1, 2 ou 3, caractérisée en ce que l'élément d'étanchéité (13) a des dimensions telles qu'il s'emboîte de façon lâche dans la partie creuse (16) du siège de vanne pour des températures de fonctionnement normales de l'unité, mais est capable de se dilater sous la pression occasionnée par le contact de la tubulure (11) en poussant l'élément d'étanchéité (13) contre le siège de vanne (16), au moins sensiblement pour fermer la partie creuse (16) du siège de vanne quand le flotteur (3) monte dans la cuve à niveau constant en amenant le bras de pivot (4) à soulever le siège de vanne (16) et l'élément d'étanchéité (13) pour former la tubulure (11).

5. Unité de chauffage de l'eau selon l'une quelconque des revendications 1 à 4, caractérisée en ce que l'élément d'étanchéité (13) est cylindrique et a une épaisseur supérieure à la largeur de l'intervalle entre la tubulure (11) et l'élément d'étanchéité (13) quand le flotteur repose sur le fond de la cuve.

6. Unité de chauffage de l'eau selon l'une quelconque des revendications 1 à 5, caractérisée en ce que la surface inclinée (14) est tronconique et entoure totalement la partie creuse (12) du siège de vanne.
